Europäisches Patentamt

European Patent Office

Office européen des brevets

(19)

(11) Veröffentlichungsnummer : **0 116 563**
**B1**

(12) **EUROPÄISCHE PATENTSCHRIFT**

(45) Veröffentlichungstag der Patentschrift :
30.09.87

(51) Int. Cl.⁴ : **B 60 P   3/34**

(21) Anmeldenummer : 83902078.1

(22) Anmeldetag : 07.07.83

(86) Internationale Anmeldenummer :
PCT/AT 83/00018

(87) Internationale Veröffentlichungsnummer :
WO/8400331 (02.02.84 Gazette 84/03)

(54) FAHRZEUG, INSBESONDERE WOHNMOBIL ODER WOHNWAGEN, MIT RAUMERWEITERUNG.

(30) Priorität : 08.07.82 AT 2662/82

(43) Veröffentlichungstag der Anmeldung :
29.08.84 Patentblatt 84/35

(45) Bekanntmachung des Hinweises auf die Patenterteilung : 30.09.87 Patentblatt 87/40

(84) Benannte Vertragsstaaten :
AT DE FR

(56) Entgegenhaltungen :
CH-A-   544 674
FR-A- 1 406 611
FR-A- 1 473 117
FR-A- 2 145 856
US-A- 2 831 722
US-A- 4 188 057
US-A- 4 192 543

(73) Patentinhaber : RÖCK, Siegfried
Bischofplatz 1
A-8010 Graz (AT)

HERZOG, Reinhold
Bischofplatz 1
A-8010 Graz (AT)

RAINER, Hans-Peter
Bischofplatz 1
A-8010 Graz (AT)

(72) Erfinder : RÖCK, Siegfried
Bischofplatz 1
A-8010 Graz (AT)
Erfinder : HERZOG, Reinhold
Bischofplatz 1
A-8010 Graz (AT)
Erfinder : RAINER, Hans-Peter
Bischofplatz 1
A-8010 Graz (AT)

(74) Vertreter : Sonn, Helmut et al
Patentanwälte Dipl.-Ing. Helmut Sonn, Dr. Heinrich
Pawloy, Dipl.-Ing. Arnulf Weinzinger Riemergasse 14
A-1010 Wien (AT)

**Beschreibung**

Die Erfindung betrifft ein selbstfahrendes oder gezogenes Fahrzeug, insbesondere Wohnmobil oder Wohnwagen, mit einem kastenförmigen Aufbau, der mit aus dem Aufbau ausklappbaren Wandelementen versehen ist, die im Abstellzustand des Fahrzeuges die Bildung eines an das Fahrzeug angebauten Zusatzraumes ermöglichen, wobei an einer Längsseite des Kastenaufbaues wenigstens eine am Aufbau bzw. Chassis um eine waagrechte Schwenkachse nach unten ausschwenkbar gelagerte, den Boden eines Zusatzraumes bildende rechteckige Wand und wenigstens eine um eine waagrechte Schwenkachse nach oben ausschwenkbar gelagerte, das Dach dieses Zusatzraumes bildende rechteckige Wand vorgesehen sind, und an der nach unten ausschwenkbaren, den Boden bildenden Wand sowohl Seitenwände als auch eine Rückwand scharnierartig angelenkt sind, und diese Seitenwände und Rückwand in der Ruhestellung an die den Boden bildende Wand angeklappt und in der ausgeschwenkten Stellung mit der nach oben ausschwenkbaren, das Dach bildenden Wand sowie untereinander verbindbar sind.

Bei derartigen Fahrzeugen, wie Wohnmobilen oder Wohnwagen, stehen einander zwei gegensätzliche Forderungen gegenüber, nämlich einerseits aus fahrtechnischen Gründen die Forderung nach möglichst kleinen Außenabmessungen und andererseits der Wunsch nach einem möglichst großen Platzangebot. Diesen Forderungen kann durch den bei Fahrzeugen vorgenannter Art vorgesehenen Zusatzraum entsprochen werden. Ein solches Fahrzeug ist z. B. in der CH-A-544 674 beschrieben. Bei diesem bekannten Fahrzeug sind die Bodenwand, die Dachwand, die Rückenwand und die Seitenwände, abgesehen von der Schwenklagerung der Rückwand und der Seitenwände an der Bodenwand, unabhängig voneinander frei schwenkbar angeordnet und müssen beim Aufstellen des Zusatzraumes und beim Zusammenklappen dieser Wände von Hand aus bewegt und positioniert werden, was verhältnismäßig schwierig ist.

Es ist nun Ziel der Erfindung, ein Fahrzeug der eingangs angeführten Art zu schaffen, bei dem die für den angestrebten Raumausbau beim stehenden Fahrzeug und die für das Zusammenklappen und Einwärtsschwenken der einzelnen am Raumausbau verwendeten Wände beim Abbauen des Raumausbaues zum Fahrbereitmachen des Fahrzeuges erforderlichen Bewegungs- und Positionierungsarbeiten möglichst leicht und einfach vorgenommen werden können.

Das erfindungsgemäße Fahrzeug der eingangs angegebenen Art ist dadurch gekennzeichnet, daß an zumindest einem der im rechten Winkel zur Schwenkachse verlaufenden Seitenränder der nach oben ausschwenkbaren, das Dach bildenden Wand eine Führungsbahn für die im ausgeklappten Zustand äußere Rückwand oder einen mit dieser fest verbundenen Führungsvorsprung, -zapfen oder dergl., insbesondere eine frei drehbar gelagerte, in der Führungsbahn laufende Rolle, vorgesehen ist, an welche Führungsbahn eine am Aufbau vorgesehene, nach unten verlaufende Führungsbahn über einen bogenförmigen Führungsbahnabschnitt anschließt, wodurch das Anklappen der Rückwand an die den Boden bildende Wand zwangsgesteuert ist. Durch diese Ausbildung kann der vorgenannten Zielsetzung gut entsprochen werden. Es wird dabei insbesondere das Zusammenklappen und Einwärtsschwenken der Wände in ihre Ruhestellung am bzw. im Fahrzeugaufbau erleichtert. Dabei wird nicht nur die Rückwand selbsttätig, d. h. zwangsgesteuert, an die den Boden bildende Wand angeklappt, sondern auch das Abwärtsschwenken (bzw. selbstverständlich auch das Aufklappen) der das Dach bildenden Wand gesteuert, wobei diese das Dach bildende Wand außerhalb der den Boden bildenden Wand angeklappt wird, d. h. erst in die vertikale Ruhestellung geschwenkt wird, nachdem die den Boden bildende Wand mit ihrem äußeren bzw. in Ruhestellung oberen Rand unter die das Dach bildende Wand getreten ist. Eine ähnliche Steuerung kann auch für die Seitenwände, um diese selbsttätig auf- oder anzuklappen, vorgesehen werden.

Um die Seitenwände platzmäßig leichter unterbringen zu können, ist es dabei auch günstig, wenn die Seitenwände, vorzugsweise gemäß einer parallel zu ihrer Scharnierachse an der den Boden bildenden Wand verlaufenden Linie, unterteilt und die Seitenwandteile jeweils scharnierartig miteinander verbunden sind. Die oberen Seitenwandteile können dabei auch, zumindest teilweise, aus transparentem Material bestehen und so als Fenster dienen.

Die erfindungsgemäße Ausbildung von Fahrzeugen kann bei deren Herstellung von vornherein vorgesehen werden, aber es ist auch möglich, bereits vorhandene Fahrzeuge, darunter insbesondere auch Kleinbusse, Lieferwagen, Kleinlastkraftwagen oder dergl., mit in erfindungsgemäßer Weise ausgebildeten ausschwenkbaren Wänden auszurüsten. Letzteres kann auch durch Einbau einer Zusatzeinrichtung bewerkstelligt werden, welche ein am Fahrzeug befestigbares Einbau-Lagergestell aufweist, an dem die Wände schwenkbar gelagert sind. Ein solches Einbau-Lagergestell kann als Einbaurahmen ausgebildet sein, der in Ansicht die Form eines, an einer Seite gegebenenfalls offenen, Rechteckes aufweist. Eine derartige Zusatzeinrichtung kann in wenigen bestimmten Größen hergestellt werden, und man kann zur Größenanpassung des Gestells bzw. Rahmens an das jeweilige Fahrzeug bzw. die dort vorgesehene Öffnung gegebenenfalls Füll- oder Anpaßstücke verwenden.

Um für die Fahrt eine aerodynamisch günstige Außenform des Fahrzeuges zu ermöglichen, ist es weiters günstig, wenn die den Boden und das Dach des Zusatzraumes bildenden Wände in ihrer vertikalen Ruhestellung in Draufsicht innerhalb der Umrißlinie des Fahrzeuges liegen. Grundsätzlich wäre es jedoch auch möglich, die Wände und gegebenenfalls diese Wände in Ruhestellung umgebende Rahmen, in denen die Wände schwenkbar gelagert sind, außen über die Umrißlinie des Fahrzeuges vorstehen zu lassen, was insbesondere dann der Fall sein kann, wenn ein bereits vorhandenes Fahrzeug mit derartigen ausschwenkbaren Wänden nachgerüstet wird.

Der durch die ausschwenkbaren Wände erzielbare Zusatzraum kann beispielsweise als Abstellraum oder aber als Wohnraum, mit Sitzgelegenheiten, verwendet und ausgestaltet werden. Da es aber wünschenswert ist, das Fahrzeuginnere selbst als möglichst ungehindert benutzbaren Wohnraum zur Verfügung zu haben, der insbesondere auch dann, wenn der Zusatzraum nicht installiert ist, benützt werden kann, also z. B. bei kurzen Rasten, ist es zweckmäßig, den Zusatzraum als Schlafraum auszubilden. Man kann hiezu die Bodenwand mit einem Bett versehen bzw. als Liege ausbilden. Auf diese Weise wird eine Art Schrankbett erhalten, das zur Benützung jedoch nicht nach innen, sondern nach außen aufgeklappt wird.

Für das Ausschwenken und für das Einschwenken der Wände kann man einen Seilzug vorsehen. Die Seiltrommel desselben kann beispielsweise hydraulisch oder elektrisch oder auch von Hand aus angetrieben werden. Man kann einen solchen Seilzug auch durch einen weiteren Schwenkantrieb ergänzen, wobei der Kurbeltrieb des Seilzuges Teil eines solchen Schwenkantriebes, wie z. B. eines Zahnradgetriebes oder eines Nocken-Mitnehmer-Getriebes, sein kann. So kann auch dann, wenn die Umlenkrolle des Seilzuges aus Platzgründen im ganz oberen Randbereich des Fahrzeug-Aufbaues untergebracht ist, auf einfache Weise eine zusätzliche Antriebsmöglichkeit für die Einwärtsschwenkung der Wände im kritischen Winkelbereich nahe der vertikalen Ruhestellung erhalten werden. Zum Verschwenken der Wände kann auch ein Druckzylinder, insbesondere ein doppeltwirkender, z. B. hydraulischer oder pneumatischer, Druckzylinder, vorgesehen sein. Ein derartiger Druckzylinder kann im einfachsten Fall einerseits am Aufbau und andererseits an der Wand seitlich gelenkig befestigt sein, oder er kann über ein Hebelgestänge die Wände verschwenken. Die Steuerung eines derartigen Druckzylinders kann in herkömmlicher Weise, beispielsweise mittels in den Druckmittelleitungen angeordneten Solenoidventilen, bewerkstelligt werden.

Von besonderem Vorteil ist es weiters, wenn für die nach oben ausschwenkbare, das Dach des Zusatzraumes bildende Wand in an sich bekannter Weise eine mit ihr verbundene Gewichtsausgleichsfeder, z. B. eine um die Schwenkachse der Wand herum angeordnete, gekapselte Schrauben-Drehfeder, vorgesehen ist. Um weiters auf einfache Weise eine Fixierung der das Dach bildenden Wand sowohl in ihrer vertikalen Ruhestellung als auch in ihrer ausgeschwenkten Dachlage zu erzielen, kann die nach oben ausschwenkbare, das Dach des Zusatzraumes bildende Wand in an sich bekannter Weise durch eine Feder in ihre vertikale Ruhestellung sowie in ihre abgeschwenkte Dachlage belastet sein. Insbesondere kann eine Feder-Kippmechanik für diese Wand vorgesehen sein, wie sie von Kipptoren, insbesondere Garagentoren und dergl., oder aber von Wandklappbetten an sich bekannt ist, vgl. z. B. die AT-A-241 091, AT-A-241 783, AT-A-261 180, AT-A-277 556 bzw. AT-A-146 680.

Im Sinn der der Erfindung zugrundeliegenden Zielsetzung, am Fahrzeug einfach handhabbare Zusatzräume einzurichten, ist eine Weiterbildung des erfindungsgemäßen Fahrzeuges vorteilhaft, welche dadurch gekennzeichnet ist, daß die Eingangstüre an der dem Zusatzraum gegenüberliegenden Längswand des Kastenaufbaues vorgesehen ist, und daß an der die Eingangstüre aufweisenden Längsseite des Kastenaufbaues im unteren, tiefer als die Tür gelegenen Bereich des Aufbaues bzw. Chassis eine Führung, wie zumindest ein Einschubfach, zur Aufnahme einer begehbaren, gegebenenfalls mehrteiligen, Platte, die zur Bildung eines Vorplatzes oder einer Terrasse vorgesehen ist, angeordnet ist, und die Platte aus einer Ruhestellung, in der sie sich, in Draufsicht gesehen, innerhalb der Umrißlinie des Fahrzeuges befindet, an der Seite, an der die Tür vorgesehen ist, in eine einen Vorplatz oder eine Terrasse ergebende Betriebsstellung ausziehbar ist. Auf dieser Platte kann dann beispielsweise ein an sich bekanntes Vorzelt errichtet werden. Auch in diesem Fall ist dadurch, daß sich das Niveau des Vorplatzes bzw. der Terrasse oberhalb des Erdbodenniveaus befindet, eine bessere Einbeziehung dieses Zusatzraumes in die Raum- oder Wohneinheit erzielt als etwa im Fall eines auf dem Erdboden selbst aufgestellten Vorzeltes, wie dies bisher üblich ist.

Dadurch, daß ein Vorzelt auf der genannten Platte, also auf dem Vorplatz bzw. auf der Terrasse, und somit im Abstand vom Erdboden aufgestellt werden kann, wie auch der Vorteil eines besseren Kälte- und Feuchtigkeitsschutzes erzielt.

Man kann die Anordnung auch so treffen, daß die Platte auch auf der der Tür gegenüberliegenden Seite des Fahrzeuges ausziehbar ist, an der sich die ausschwenkbaren Wände befinden ; die ausziehbare Platte kann dann einen zusätzlichen oder Zweitboden bilden.

Aus Platzgründen ist es besonders vorteilhaft, wenn die den Vorplatz oder die Terrasse bildende Platte entlang paralleler Linien unterteilt ist und die Teile scharnierartig zusammenklappbar miteinander verbunden sind. Dadurch wird das Verstauen der Platte erleichtert. Im Fall der unterteilten Platte, mit den scharnierartig miteinander verbundenen Teilen, ist es weiter günstig, wenn die parallelen Unterteilungslinien parallel zur Ausziehrichtung verlaufen.

Auch ist es weiters günstig, wenn die Platte bzw. deren Teile an der Unterseite mit vorzugsweise längenverstellbaren Klappstützen zur Abstützung am Boden versehen ist bzw. sind.

Eine vorteilhafte Ausführungsform ist ferner dadurch gekennzeichnet, daß die den Vorplatz oder die Terrasse bildende Platte als Rost ausgebildet und auf dem Rost auflegbare, ebene Bodenplatten vorgesehen sind. Bei dieser Ausführungsform kann der Rost für die Bildung einer Terrasse verwendet werden, und die zusätzlichen, vollen Bodenplatten werden aufgelegt, wenn ein Vorzelt errichtet werden soll. Die Ausbildung als Rost ist dabei insofern von Vorteil, als der beim Begehen anfallende Schmutz ebenso wie Regenwasser problemlos durchfallen bzw. abgeführt werden kann.

Zur Erzielung eines festen Plattenverbandes ist es günstig, wenn die Bodenplatten mit dem Rost und/oder untereinander, z. B. mittels Klemmen, Steckverbindungen und/oder Nut-Federeinrichtungen, verbindbar sind. Andererseits hat es sich hier auch als vorteilhaft erwiesen, wenn der Rost einen hochstehenden Rand aufweist, innerhalb dessen die aneinandergelegten Bodenplatten passen. Auch ist es günstig, wenn die Bodenplatten mit Hilfe von an ihrer Unterseite angebrachten Klemmvorsprüngen an den Stäben des Rostes festklemmbar sind.

In der Regel werden mehrere Platten sowie gegebenenfalls Bodenplatten vorgesehen, um den Vorplatz bzw. Terrassenplatz zu erhalten. Diese Platten oder aber zusätzliche, weitere Platten können darüberhinaus auch für andere Zwecke eingesetzt werden : Beispielsweise können einige Platten zu einem Windfang zusammengesetzt werden, und überdies ist ein Abschluß des freien Raumes unter dem Fahrzeug durch die Platten möglich, die senkrecht rund um das Fahrzeug herum an diesem aufgestellt und an der senkrechten Aufbauwand befestigt werden. Auf diese Weise wird eine Art Unterbau erhalten, der einen Bodenschutz bei stationärer Aufstellung des Fahrzeuges, insbesondere Wohnwagens, ermöglicht, was insbesondere beim Wintercamping von Vorteil ist. Sofern gesonderte Bodenplatten vorgesehen sind, ist es überdies vorteilhaft, wenn im Aufbau wenigstens ein verschließbares Einschubfach für die Bodenplatten vorgesehen ist.

Wie bereits erwähnt, kann mit den Platten bzw. Bodenplatten auch ein Windfang zusammengestellt werden, und es ist demgemäß von besonderem Vorteil, wenn an der Wand des Fahrzeug-Aufbaues im Bereich der Tür Verbindungseinrichtungen, wie Einsteck- oder Einhaköffnungen, zum kantenweisen Anschließen, z. B. insbesondere Anstecken, von sich vertikal und horizontal erstreckenden Platten zur Bildung eines Windfanges vorgesehen sind. Dabei ist es insbesondere möglich, die Platten untereinander und mit der Aufbauwand im Bereich der Tür einfach durch Zusammenstecken, etwa über einschiebbar Federn und entlang der Kanten verlaufende, hinterschnittene Nuten, zusammenzusetzen. Selbstverständlich können die Platten jedoch auch untereinander und gegebenfalls, sofern vorgesehen, mit einem eigenen Windfang-Türrahmen, verschraubt werden.

Die Erfindung wird nachstehend anhand von in der Zeichnung dargestellten Ausführungsbeispielen weiter erläutert. Dabei zeigen in der Zeichnung im einzelnen :

Figur 1 eine schematische, perspektivische Ansicht eines Anhänger-Wohnwagens, und zwar im fahrbereiten Zustand ;

Figur 2 eine schematische Schnittdarstellung mit ausgeklappten, Zusatzräume schaffenden Wänden und Platten ;

Figur 3 eine perspektivische, vereinfachte Ansicht eines Wohnwagen-Anhängers mit einem ausgeklappten Zusatzraum ;

Figur 4 einen Vertikalschnitt durch den Wohnwagen gemäß Fig. 3 im Bereich des ausgeklappten Zusatzraumes ;

die Figuren 5 bis 7 verschiedene Phasen des Zusammenklappens des aus- und einklappbaren Zusatzraumes nach Fig. 3 und 4 ;

Figur 8 einen Vertikalschnitt durch diesen Zusatzraum nach den Fig. 3 bis 7 in eingeklapptem Zustand, innerhalb des Umrisses des Wohnwagens ;

Figur 9 ganz schematisch in Stirnansicht eine ausschwenkbare Wand mit einer Schwenkantriebseinrichtung ;

Figur 10 einen vertikalen Schnitt durch einen Wohnwagen im Bereich der Seitenwand, mit einer Schwenkwand und einem Druckzylinder hiefür als Schwenkantrieb ;

Figur 11 ganz schematisch ein Getriebe zum Verschwenken der ausschwenkbaren Wand über einen bestimmten Winkel ;

Figur 12 einen Vertikalschnitt durch den seitlichen Bereich eines Wohnwagens mit einer ausschwenkbaren Wand, der eine sie in die aus- bzw. eingeklappte Stellung belastende Zugfeder zugeordnet ist ;

Figur 13 einen Detail-Querschnitt im Bereich des Randes der das Dach bildenden schwenkbaren Wand und des kastenförmigen Lagerrahmens im Aufbau, zur Veranschaulichung der Führung der Rückwand beim Zusammen- bzw. Auseinanderklappen der Zusatzraum-Einheit gemäß den Fig. 3 bis 7 ;

Figur 14 schematisch einen Querschnitt durch den Bereich der Schwenkachse der ausschwenkbaren Wand, zur Veranschaulichung einer die Schwenkachse umgebenden, gekapselten Schrauben-Drehfeder, die zum Gewichtsausgleich beim Ausschwenken der Wand vorgesehen ist ;

Figur 15 eine perspektivische Ansicht eines Wohnwagens mit einem Vor- oder Terrassenplatz, auf dem ein Vorzelt aufgestellt ist ;

Figur 16 eine Seitenansicht dieses Wohnwagens, wobei ein Teil der Platten zu einem den Wohnwagen einschließenden Unterbau zusammengestellt ist und wobei schematisch ein Windfang veranschaulicht ist ;

Figur 17 eine schematische Teil-Schnittdarstellung zur Veranschaulichung einer Verbindungsmöglichkeit für Platten ;

Figur 18 eine Detail-Schnittdarstellung zur Veranschaulichung einer Klemmverbindung von gesonderten Bodenplatten an den Stäben eines Rostes, und

Figur 19 eine Schnittansicht zur Veranschaulichung von zu einem Rahmengebilde, etwa für einen Windfang, zusammengesteckten Platten.

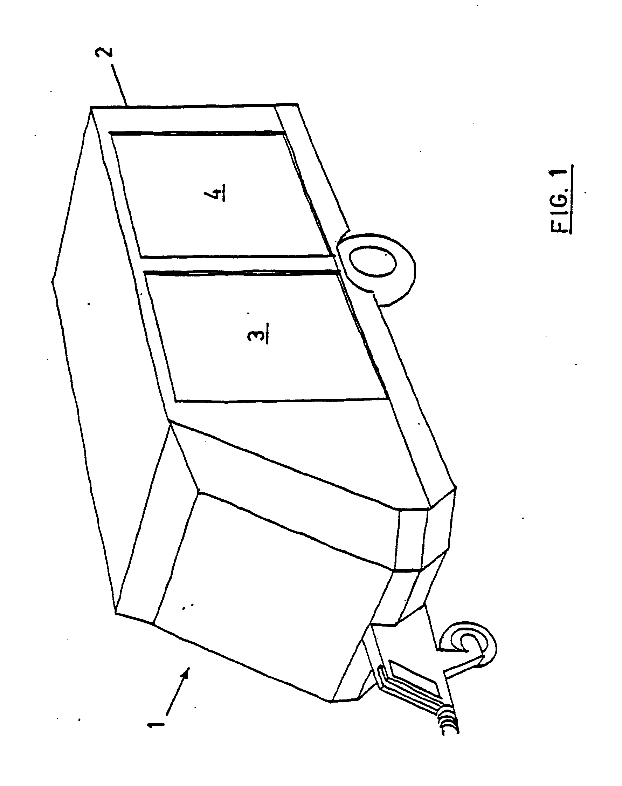

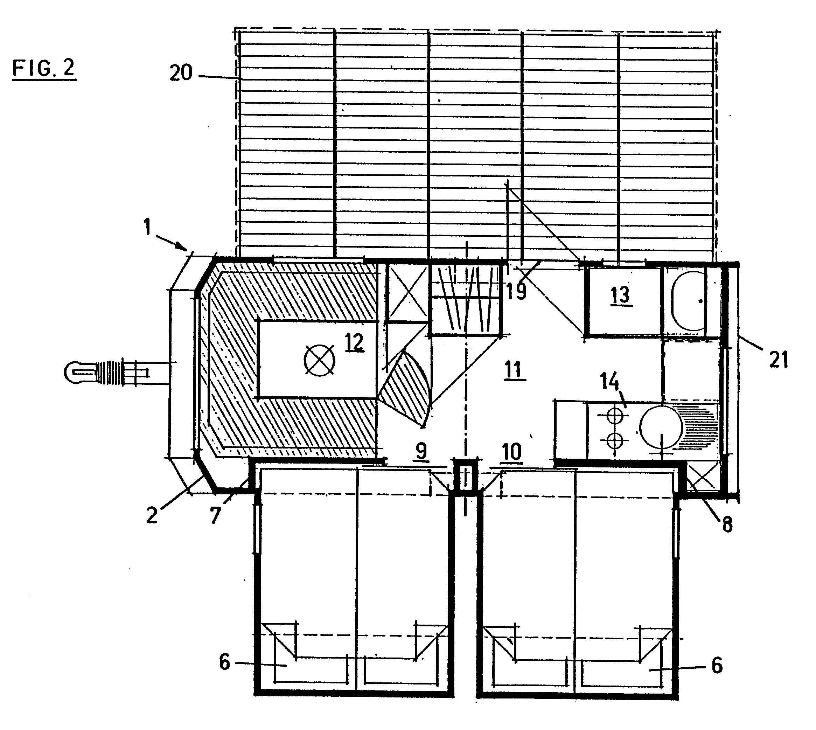

Der in den Fig. 1 und 2 dargestellte einachsige Wohnwagen-Anhänger 1 ist mit einem im wesentlichen kastenförmigen Aufbau bzw. Chassis 2 versehen, an dem an der einen, in Fig. 1 vorderen Längsseite zwei nach unten ausschwenkbare Wände 3, 4 angebracht sind. An ihrer Oberseite bzw. Innenseite sind die Wände 3, 4 mit Betten oder Liegen 6 versehen (Fig. 2), sodaß im ausgeschwenkten Zustand der Wände zwei als Schlafräume verwendbare Zusaträume erhalten werden. Die Wände 3, 4 mit den Betten 6 sind dabei in einem kastenartigen Rahmen 7 bzw. 8 gelagert, in dem eine Öffnung 9 bzw. 10 vorgesehen ist, die den Zutritt vom Inneren des Wohnwagens, das allgemein mit 11 bezeichnet ist, ermöglicht. Das Wohnwageninnere 11 kann dabei mit auch bei eingeklappten Zusatzräumen zugänglichen und nutzbaren Einrichtungen, wie etwa einer Sitzecke 12 und einer Wasch- und Toilettenanlage 13 und einer Kochnische 14 an der Rückseite 21 des Wagens versehen sein. Statt zwei Zusaträume vorzusehen, deren Boden durch die Wände 3, 4 gebildet ist, kann selbstverständlich auch eine andere Anordnung getroffen werden, z. B. mit nur einem eine Schlafkoje bildenden Zusatzraum, d. h. nur einer ausklappbaren Wand, die jedoch mit angenommen drei Betten oder aber vier Betten ausgerüstet ist. Weiters wäre es auch möglich, einen der auf den Wänden 3, 4 aufgebauten Zusaträume ohne Betten als zusätzlichen Abstellraum oder dergl. vorzusehen.

Wie insbesondere aus Fig. 1 ersichtlich ist, fluchten die Wände 3, 4 mit ihren Außenflächen in ihrer vertikalen Ruhestellung mit der Längswand des Aufbaues 2, sodaß keine vorspringenden Karosserieteile vorliegen, die einen erhöhten Luftwiderstand ergeben würden.

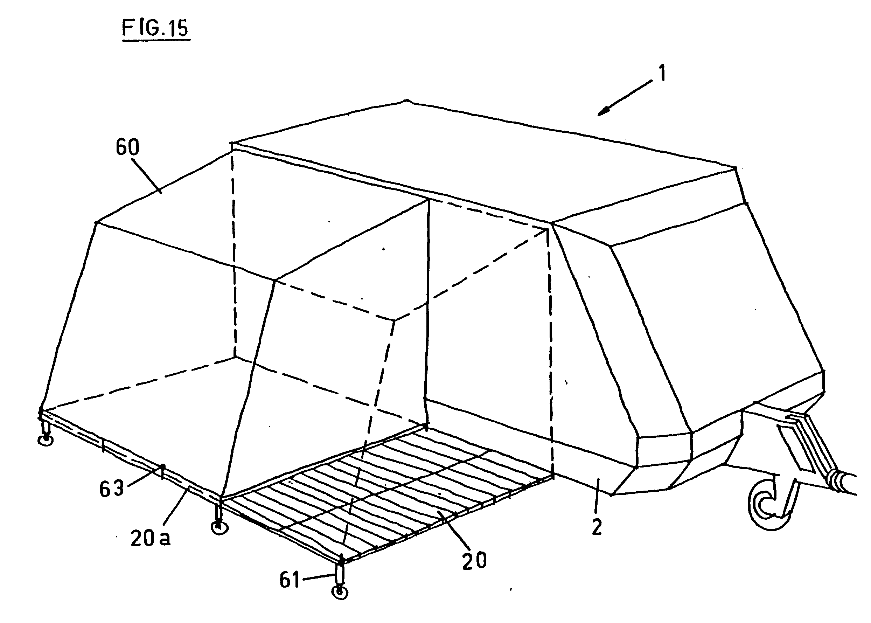

Wie weiters aus Fig. 2 ersichtlich ist, ist an der den Zusaträumen gegenüberliegenden Längsseite des Wohnwagens 1, an der sich die Wohnwagentür 19 befindet, ein terrassenartiger Vorplatz 20 vorgesehen, dessen Ausbildung und Funktion weiter unten anhand der Fig. 15 bis 19 noch näher erläutert werden wird.

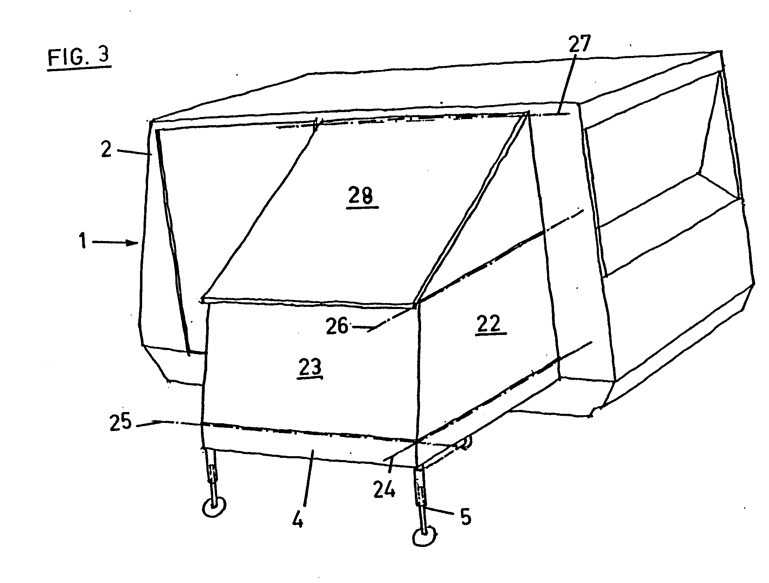

Im Detail sind die einen Zusatzraum bildenden ausklappbaren Wände in den Fig. 3 bis 8 schematisch veranschaulicht. In Fig. 3 ist nur einer der beiden Zusaträume des Wohnwagens 1 im ausgeklappten Zustand, der andere jedoch im eingeklappten Ruhezustand gezeigt. Zur Bildung der Zusaträume ist eine untere, den Boden einer Zusatzraumeinheit bildende, um eine untere, waagrechte Schwenkachse am Wohnwagenaufbau 2 schwenkbare Wand, z. B. 4, vorgesehen, die sich im ausgeschwenkten Zustand über ausklappbare, längenverstellbare Stützen 5 am Boden abstützt. An dieser ausschwenkbaren Bodenwand 4 sind scharnierartig zwei Seitenwände 22 (von denen in Fig. 3 nur die hintere Seitenwand zu sehen ist) sowie eine Rückwand 23 einwärts klappbar befestigt. Die Klappachsen sind dabei in Fig. 3 schematisch bei 24 bzw. 25 veranschaulicht. Die Seitenwände 22 sind weiters unterteilt, um das Zusammenlegen zu erleichtern, und die beiden Seitenwandteile sind dabei um eine zur Klappachse 24 parallele Achse 26 gegeneinander schwenkbar scharnierartig miteinander verbunden. Schließlich ist als Dach eine obere, um eine obere waagrechte Schwenkachse 27 am Wohnwagenaufbau 2 schwenkbare Wand 28 vorgesehen, die in der ausgeschwenkten Lage gemäß Fig. 3 ein Schrägdach bildet.

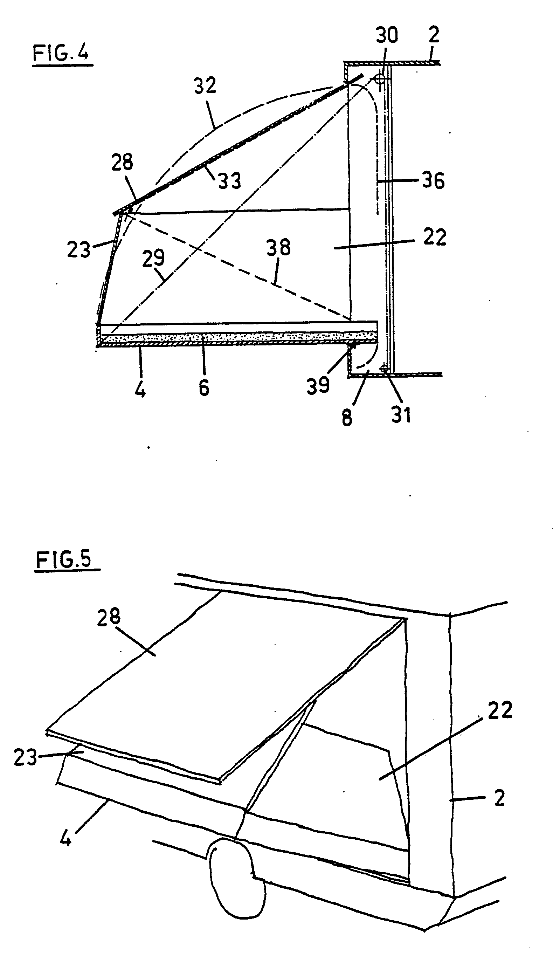

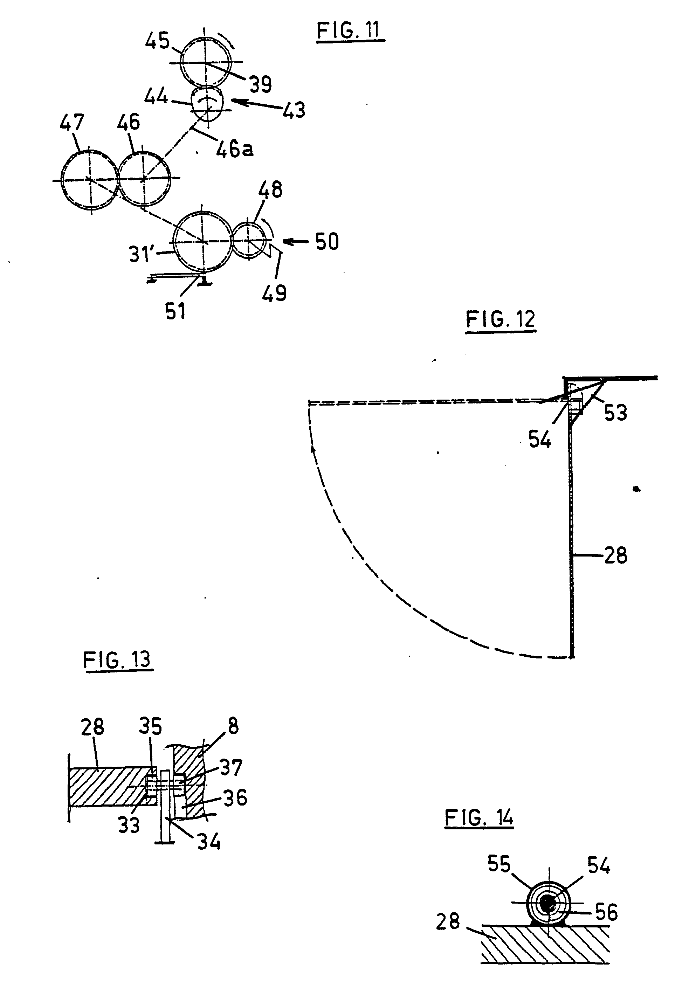

Aus der Schnittdarstellung gemäß Fig. 4 ist ersichtlich, daß zum Verschwenken der das Bett 6 tragenden unteren Wand 4 ein Seilzug mit einem Seil 29 vorgesehen ist, das im äußeren Eckbereich der Wand 4 an dieser befestigt ist und sich von da, wenn die Wand 4 in die horizontale Gebrauchslage ausgeschwenkt ist, schräg nach oben zu einer Umlenkrolle 30 erstreckt, die am Aufbau 2 bzw. dem dort angebrachten Rahmen 8 (vgl. auch Fig. 2) drehbar gelagert ist. Von dieser Umlenkrolle 30 erstreckt sich das Seil 29 sodann vertikal nach unten zu einer Seiltrommel 31, deren Antrieb weiter unten anhand der Fig. 11 noch näher erläutert werden wird. In Fig. 4 ist weiters die Bewegungsbahn 32 des äußeren Randes der unteren Wand 4 bei deren Einwärtsschwenken oder Zusammenklappen veranschaulicht. Weiters ist in Fig. 4 schematisch eine Führungsbahn für die Rückwand 33 angedeutet, wobei diese Führungsbahn aus zwei Teilen zusammengesetzt ist. Einerseits ist, wie sich auch aus Fig. 13 ergibt, eine Führungsbahn 33 an der Schmalseite der oberen Wand 28 vorgesehen, und in dieser Führungsbahn 33 ist die Rückwand 23 mittels einer an einem mit ihr fest verbundenen Vorsprung 34 frei drehbar gelagerten Rolle 35 geführt ; andererseits ist im Aufbau 2, d. h. genauer gesagt im darin angeordneten Lagerrahmen 8, eine Führungsbahn 36 vorgesehen, die mit einem zunächst bogenförmigen oberen Abschnitt und einen sich daran anschließenden vertikalen Abschnitt die Führung der Rückwand 23 bewerkstelligt, nachdem diese bei Erreichen der Seitenwand des Aufbaues 2 nicht weiter von der oberen Wand 28 geführt werden kann. Wie aus Fig. 13 ersichtlich ist, läuft dabei in der Führungsbahn 36 eine weitere Rolle 37, die koaxial zur Rolle 35 am seitlichen Vorsprung 34 der Rückwand 23 befestigt ist. Damit wird beim Zusammenklappen der einzelnen Wände eine Zwangssteuerung für die Rückwand 23 erzielt, wenn die untere Wand 4 gemäß der Darstellung in Fig. 4 im Uhrzeigersinn mit Hilfe des Seiles 29 nach oben geschwenkt wird.

Um eine ähnliche Steuerung zum automatischen Umklappen der Seitenwände 22 beim Einschwenken der Wand 4 mit Hilfe des Seiles 29 zu erzielen, sodaß sich, wenn das Seil 29 auf der Seiltrommel 31 aufgerollt wird, nicht nur die Rückwand 23, sondern auch die Seitenwände 22 selbsttätig umlegen, kann ein Steuerseil 38 vorgesehen sein (Fig. 4), das einerseits im äußeren Eckbereich an den Seitenwänden 22 und andererseits innen an der Wand 4 — und zwar an jenem Bereich, der sich von deren Aufbau-fester Schwenkachse 39 nach innen erstreckt — befestigt ist.

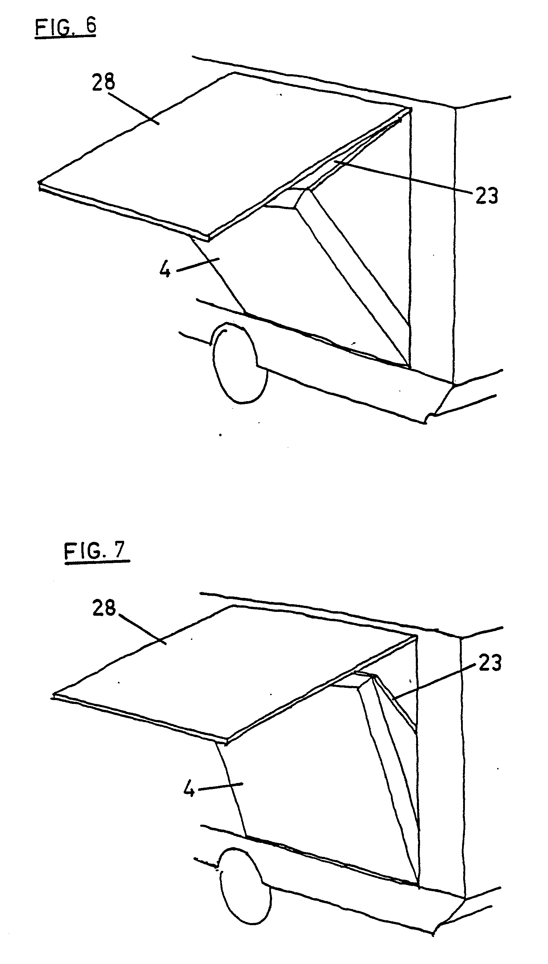

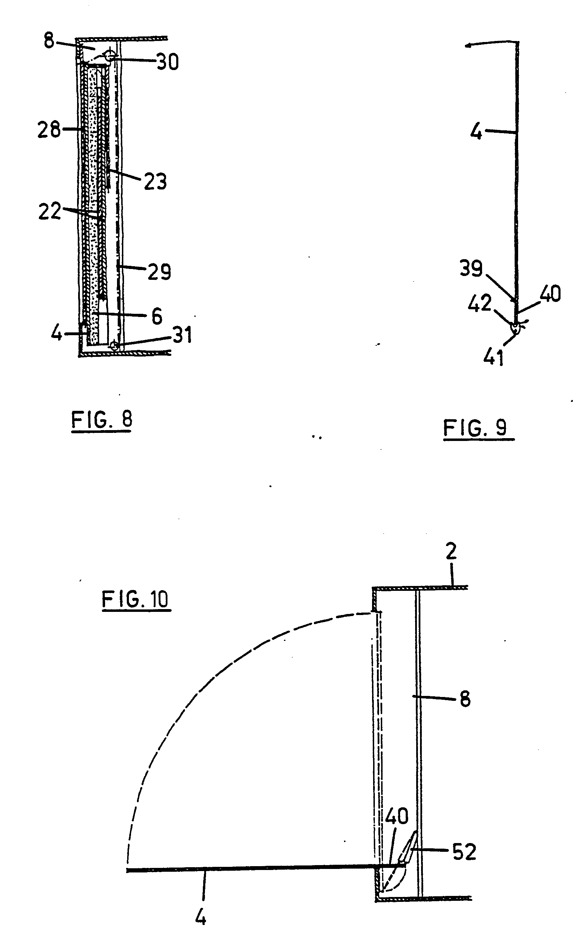

In den Fig. 5 bis 8 sind nun verschiedene Phasen beim Zusammenklappen der beschriebenen Zusatzraum-Einheit veranschaulicht, und zwar in den Fig. 5 bis 7 in perspektivischen Teilansicht und in Fig. 8 in einem vertikalen Schnitt, der die vollständig eingeklappte Lage veranschaulicht. In Fig. 6 ist dabei jener Moment dargestellt, in dem die Seitenwände 22 bereits vollständig umgelegt sind, und in dem die Führung der Rückwand 23 von der oberen Wand 28 auf den Aufbau 2 bzw. die dort angebrachte Führungsbahn 36 übergeht. Danach liegt, wie Fig. 7 zeigt, die das Dach bildende obere Wand 28 einfach am äußeren Rand der den Boden bildenden unteren Wand 4 auf, wogegen zuvor, vgl. auch Fig. 5 und 13 die Rückwand 23 mit der Rolle 35 noch eine Steuerung beim Zusammenklappen der das Dach bildenden oberen Wand 28 übernommen hatte.

Aus Fig. 8 ist schließlich ersichtlich, daß im eingeklappten Zustand, in der vertikalen Ruhestellung, die das Dach bildende Wand 28 die äußere Wand ist, die den kastenartigen Rahmen 8 bzw. dessen Öffnung abschließt und dabei innerhalb der Umrißlinie des Fahrzeuges liegt, sodaß ein aerodynamisch günstiges Verhalten erzielt wird. Innerhalb der Wand 28 liegt die zur Bildung des Bodens vorgesehene, das Bett 6 tragende Wand 4, an die andererseits wiederum die Seitenwände 22 angeklappt sind, wonach schließlich ganz innen die Rückwand 23 folgt.

Wie ersichtlich ist, nimmt die ausklappbare Zusatzraum-Einheit insgesamt nur wenig Platz in Anspruch, vgl. auch die Darstellung in Fig. 2, sodaß auch dann, wenn diese Raumeinheiten nicht ausgeklappt sind, z. B. bei kurzen Rasten auf Parkplätzen, das Innere des Wohnwagens 1 ungehindert, z. B. zum Kochen und Essen, benutzt werden kann.

Um die beschriebene Zusatzraum-Einheit aus der in Fig. 8 dargestellten Ruhelage in die ausgeklappte Gebrauchslage zu verschwenken, könnte an sich einfach händisch an der dann außen liegenden Wand 28 angezogen werden, bis die Raumeinheit aufgrund des Eigengewichtes nach außen schwenkt. Andererseits kann jedoch auch hiefür eine zusätzliche Antriebseinrichtung vorgesehen werden, die dieses Ausklappen erleichtert, und die überdies beim Einklappen in der letzten Phase, nahe der Lage gemäß Fig. 8, ein sicheres endgültiges Zusammenklappen ermöglicht, wenn etwa über das Seil 29 nicht mehr genügend Kräfte auf die untere Wand 24 übertragen werden können, und zwar zufolge der Anordnung der Umlenkrolle 30, wenn sich diese anders als in Fig. 8 dargestellt mehr oberhalb der Wand 4, also gemäß der Darstellung in Fig. 8 mehr links, befinden sollte (was aus Platzgründen in manchen Fällen notwendig sein könnte). Eine Antriebsmöglichkeit ist beispielsweise in Fig. 9 veranschaulicht, wobei am über die Schwenkachse 39 vorstehenden Bereich 40 der den Boden bildenden Wand 4 ein Nocken 41 mit einem doppeltwirkenden Mitnehmer 42 angreift. Bei Verdrehen des Nockens 41 gemäß Fig. 9 im Uhrzeigersinn wird die Wand 4 zwangsweise um die Achse 39 im Gegenuhrzeigersinn verschwenkt, bis der Bereich 40 außer Eingriff mit dem Mitnehmer 42 gelangt, was etwa bei einem Winkel von 30° aus der Vertikalen der Fall ist. Danach hängt die Wand 4 nur mehr am Seil 29. Wenn umgekehrt die Wand 4 wieder in die Ruhestellung zurückgeschwenkt wird, so kommt der Nocken 41, der mit dem Seiltrommelantrieb gekuppelt ist, mit dem doppeltwirkenden Mitnehmer 42 wiederum bei einem Winkel von ca. 30°, von der Vertikalen weg gemessen, in Eingriff mit dem unteren Bereich 40 der Wand 4, sodaß eine zwangsweise Verschwenkung der Wand 4 in deren vertikale Ruhestellung erzielt wird.

Der Nocken 41 kann etwa in der Art, wie in Fig. 11 schematisch veranschaulicht ist, antriebsmäßig mit der Seiltrommel verbunden sein. In Fig. 11 ist dabei aber anstatt des Nockens 41 ein Zahnsegmentgetriebe 43 vorgesehen. Zum Zahnsegmentgetriebe 43 gehört dabei ein Zahnsegment 44, das mit einem Zahnrad 54 kämmt, welches drehfest auf einer Welle sitzt, mit der die Wand 4 (in Fig. 11 nicht dargestellt) drehfest verbunden ist, und deren Achse somit der Schwenkachse 39 der Wand entspricht. Mit dem Zahnsegment 44 ist ein Zahnrad 46 drehfest verbunden, z. B. über eine in Fig. 11 schematisch veranschaulichte Welle 46a, wobei jedoch auch eine direkte Verbindung von Zahnsegment 44 und Zahnrad 46 möglich ist, und dieses Zahnrad 46 kämmt mit einem weiteren Zahnrad 47, das auf der Welle der Seiltrommel 31 sitzt und so mit dieser Seiltrommel, die in Fig. 11 durch ein mit ihr fest verbundenes Ritzel 31′ veranschaulicht ist, drehbar ist. Das Ritzel 31′ kämmt dabei beispielsweise mit einem weiteren Zahnrad 48, das von außen mit Hilfe einer Kurbel 49 händisch verdreht werden kann, sodaß insgesamt ein manuell betätigbarer Kurbeltrieb 50 erhalten ist. Dieser Kurbeltrieb 50 dient einerseits zum Antrieb der Seiltrommel und andererseits zum zwangsweisen Verschwenken der Wand 4 in Winkelbereichen nahe der vertikalen Ruhestellung dieser Wand. Die zwangsweise Verschwenkung der Wand mit Hilfe des Zahnsegmentgetriebes 43 erstreckt sich dabei wiederum, beispielsweise über einen Winkel von ungefähr 30°, gegebenenfalls auch 45°. Die Funktionsweise des Schwenkantriebes gemäß Fig. 11 für die Wand 4 ist dabei wie ersichtlich ganz analog jener des Schwenkantriebes gemäß Fig. 9.

Um die Verschwenkung der Wand mit Hilfe des Seiles zu erleichtern, kann der Seiltrommel 31 ein Ratschengesperre oder eine einrastbare Klinke mit aufhebbarer Sperrstellung zugeordnet sein, wie dies an sich hinlänglich bekannt ist und in Fig. 11 nur ganz schematisch bei 51 veranschaulicht ist.

Selbstverständlich wäre es auch möglich, anstatt des händischen Kurbeltriebes 50 einen Antrieb mit einem Elektromotor od. dgl. für die Seiltrommel 31 vorzusehen, und überdies ist es denkbar, bei kleineren derartigen Zusatzraum-Einheiten einen solchen Antrieb überhaupt wegzulassen und die Wände einfach händisch herauszuklappen oder zurückzuschwenken. Sofern jedoch ein derartiger Antrieb vorgesehen ist, und weiters wie in Fig. 2 ersichtlich mehrere Zusatzraum-Einheiten vorhanden sind, wird selbstverständlich jeder dieser Zusatzraum-Einheiten ein gesonderter Antrieb zugeordnet, um diese Zusatzraum-Einheiten unabhängig voneinander ausklappen zu können.

Eine andere Antriebsmöglichkeit ist ganz schematisch in Fig. 10 veranschaulicht. Dabei ist am Aufbau 2 bzw. am für die Lagerung der Wand 4 vorgesehenen Rahmen 8 ein doppeltwirkender Druckzylinder 52, etwa ein Hydraulikzylinder oder ein Druckluftzylinder, mit seinem Zylindergehäuse schwenkbar befestigt. Die Kolbenstange des Druckzylinders 52 ist andererseits am unteren bzw. inneren Bereich 40 der Wand 4 gelenkig befestigt. Die Steuerung des Druckzylinders 52 kann dabei in herkömmlicher Weise, insbesondere mit elektrisch betätigten Solenoidventilen in der Druckmittelzufuhr- und -abfuhrleitung, bewerkstelligt werden, wie dies an sich bekannt ist, sodaß sich eine nähere Erläuterung einer derartigen Steuerung erübrigt.

In Fig. 12 ist schematisch ein Mechanismus mit einer Zugfeder 53 veranschaulicht, um die ausschwenkbare Wand, z. B. eine nach oben ausschwenkbare Wand 28 ähnlich der Wand 28 gemäß den Fig. 3 bis 7, sowohl in die vertikale Ruhestellung als auch in die waagrechte, ausgeschwenkte Gebrauchsstellung zu belasten. Beim Verschwenken der Wand 28 muß dabei ein durch die Feder 53 bewirkter Widerstand überwunden werden, der dann am größten ist, wenn die Feder 53 bzw. deren Wirkungslinie während der Schwenkbewegung die Schwenkachse 54 der Wand 28 schneidet. Danach zieht die Feder die Wand in die jeweilige Schwenkrichtung weiter, entweder nach oben in die waagrechte Betriebsstellung oder aber nach unten in die vertikale Ruhestellung.

Für die ausschwenkbare Wand kann gemäß Fig. 14 weiters eine Gewichtsausgleichsfeder vorgesehen sein, die als um die Schwenkachse 54 der Wand herum angeordnete, in einem zylindrischen Hohlgehäuse 55 gekapselte Schrauben-Drehfeder 56 ausgebildet ist.

Dabei ist die Schwenkachse 54 fest mit dem Aufbau bzw. Lagergestell verbunden, wogegen das zur Kapselung vorgesehene Hohlgehäuse 55 mit der Wand 28 fest verbunden, z. B. an dieser angeschweißt ist. Die Schrauben-Drehfeder 56 ist an einem Ende in bekannter Weise an der Schwenkachse 54 und am anderen Ende am Hohlgehäuse 55 fest verankert, und zwar im Fall der Wand 28 mit einer deren Gewicht entsprechenden Vorspannung, wenn sich diese Wand 28 in der vertikalen Ruhestellung befindet, sodaß beim Aufwärtsschwenken der Wand das Gewicht derselben praktisch von der Feder 56 aufgenommen wird. Selbstverständlich könnte eine derartige Gewichtsausgleichsfeder auch für die untere Wand 3 bzw. 4 vorgesehen werden, wobei dann eine entsprechend modifizierte Vorspannungseinstellung der Feder 56 vorzusehen ist, sodaß die Wand praktisch gewichtslos herausgeschwenkt bzw. wieder zurück in die vertikale Ruhestellung hinaufgeschwenkt werden kann.

Selbstverständlich sind auch noch andere Mechanismen einsetzbar, die das Verschwenken der jeweiligen Wände erleichtern, wie insbesondere eine Kippmechanik ähnlich jenen Kippmechanikeinrichtungen, wie sie z. B. für Garagentore oder aber Wandklappbetten bekannt sind.

Es sei weiters noch erwähnt, daß im Fall der Unterteilung der Seitenwände 22, wie in den Fig. 3 bis 7 dargestellt, zweckmäßigerweise der obere Seitenwandteil einfach händisch nach innen geklappt wird, bevor die Zusatzraum-Einheit in der beschriebenen Weise und wie in den Fig. 3 bis 7 gezeigt, zusammengeklappt wird. An sich könnte jedoch ein ähnliches Steuerseil wie das für den unteren Seitenwandteil vorgesehene Steuerseil 38 vorgesehen werden. Weiters ist zu erwähnen, daß die einzelnen Wände der Zusatzraum-Einheit gemäß den Fig. 3 bis 7 im ausgeklappten Zustand selbstverständlich untereinander, etwa über innenliegende, in den Randbereichen angebrachte Schnallen oder Haken mit Ösen, verbunden werden, um die Zusatzraum-Einheit in der ausgeklappten Stellung zu fixieren. Dabei liegen die Wände mit ihren Rändern dicht aneinander, und es kann zusätzlich auch an jedem Rand eine Dichtung angebracht sein, um so einen dichten Abschluß der Zusatzraum-Einheit im ausgeklappten Zustand zu erhalten.

Wie bereits erwähnt kann weiters die beschriebene Zusatzraum-Einheit gemäß Fig. 3 bis 7 bzw. Fig. 1 und 2 als für eine Nachrüstung bereits vorhandener Fahrzeuge geeignete Zusatzeinrichtung vorliegen, wobei dann der Lagerrahmen 7 bzw. 8 (Fig. 2), in dem die Wände schwenkbar befestigt sind, in ein Fahrzeug, wie etwa einen Kleinbus, eingebaut wird. Es können dabei die Schwenkwände in einigen vorgegebenen Größen hergestellt werden, und eine Anpassung an die Öffnung im Fahrzeug, in die die Zusatzeinrichtung eingebaut wird, kann mit Hilfe des dann als Einbaurahmen dienenden Lagerrahmens sowie gegebenenfalls mit zusätzlichen Füll- und Anpassungsstücken bewerkstelligt werden.

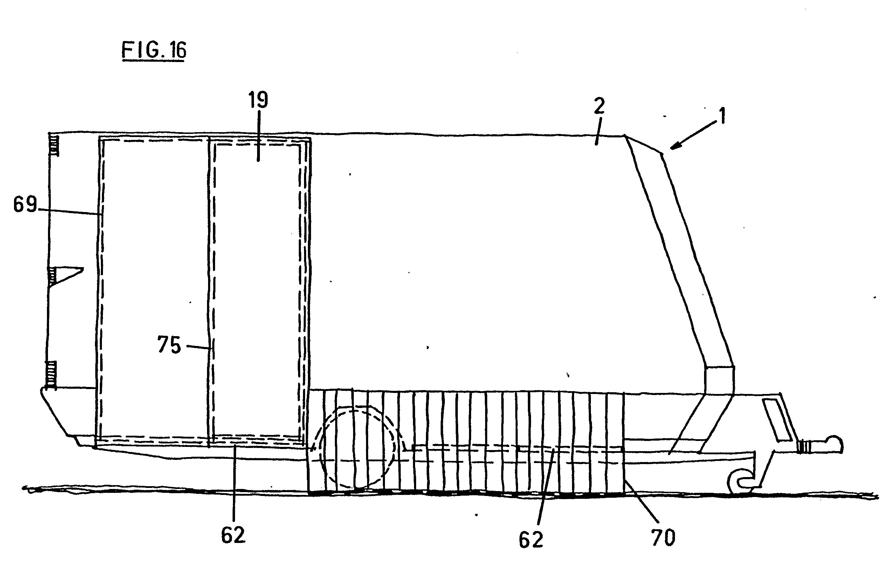

Wie die Fig. 2 und 16 zeigen, kann an der dem Zusatzraum gegenüberliegenden Längswand des Wohnwagens 1, an der die Tür 19 des Wohnwagens angeordnet ist, ein durch eine gegebenenfalls mehrteilige Platte 20 gebildeter Vorplatz oder Terrassenplatz vorgesehen werden. Auf diesem Vorplatz oder Terrassenplatz kann ein an sich herkömmliches Vorzelt 60 aufgestellt werden (Fig. 15). Dieses Vorzelt befindet sich somit in Abstand vom Erdboden, wodurch ein verbesserter Feuchtigkeits- und Kälteschutz ermöglicht wird. Weiters ist auch eine Einbeziehung in die Raum- oder Wohneinheit, die durch das Innere des Wohnwagens 1 gegeben ist, insofern leichter möglich, als das Niveau der Oberseite des Vorplatzes 20 zumindest im wesentlichen in Höhe des Bodens des Innenraumes des Wohnwagens sein kann.

Für die den Vorplatz bzw. Terrassenplatz ergebenden Platten 20 sind jedoch am Chassis 2 des Wohnwagens 1 Einschubführungen oder Einschubfächer 62 vorgesehen, wie dies in Fig. 16 ganz schematisch angedeutet ist, und in diese Einschubfächer oder Einschubführungen 62 können die Platten 20 für die Fahrt eingeschoben werden. Da im Fall eines einachsigen Wohnwagens, wie dargestellt, das Rad im mittleren Bereich ein Einschieben bzw. Ausziehen von Platten nicht ermöglicht, ist vorzugsweise eine Unterteilung in mehrere Einzelplatten 20 vorgesehen, wie dies auch aus Fig. 15 hervorgeht, wobei diese Einzelplatten zumindest zum Teil scharnierartig, mit einer sich längs der Unterteilungslinie erstreckenden Scharnierachse 63 (Fig. 15), miteinander verbunden sein können. Dadurch können die Einzelplatten, z. B. die Einzelplatten 20a, umgeklappt werden, sodaß ein Einschieben im umgeklappten Zustand sowie, nach dem Herausziehen, ein Ausklappen in die Gebrauchslage, in der sich diese Einzelplatte vor dem Rad befindet, ermöglicht wird.

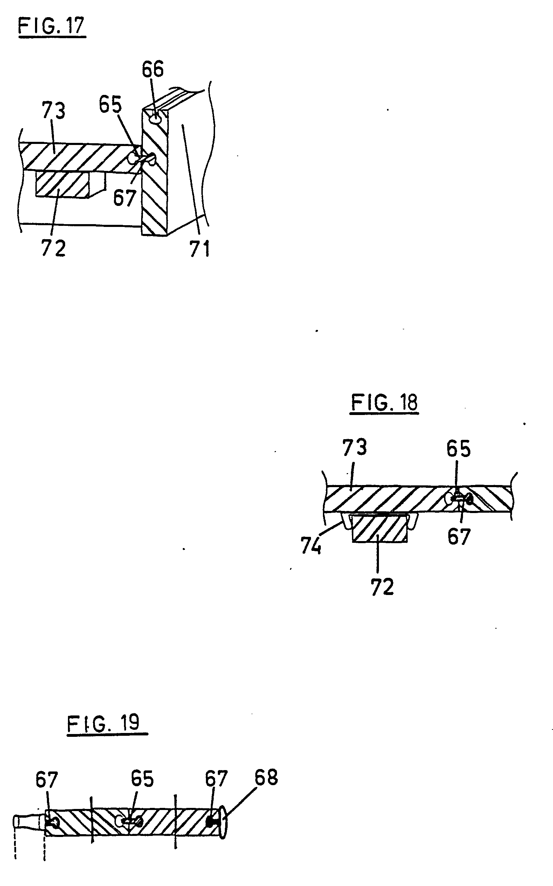

Eine andere Möglichkeit besteht darin, den Plattenverband aus lauter Einzelplatten zusammenzusetzen, wobei die Einzelplatten untereinander vorzugsweise über Steckverbindungen verbunden werden, wie sie in den Fig. 17 bis 19 bei 65 veranschaulicht sind. Dabei weisen die Platten an ihren Kanten sowie in ihren Randbereichen hinterschnittene Nuten 66 auf, und es sind gesonderte Federn 67 vorgesehen, die in diese Nuten eingesteckt werden und die Verbindung zur nächsten Platte herstellen. Wie dabei aus Fig. 19 ersichtlich ist, kann mit einer derartigen Feder auch eine die Platte an der Kante abschließende Dichtungsleiste 68 befestigt werden, die ein dichtes Anliegen der Platten mit diesen Kanten an der Wohnwagenwand ermöglicht. Dies ist dann von besonderem Vorteil, wenn mit diesen Einzelplatten gegebenenfalls, falls erwünscht, ein in Fig. 16 angedeuteter Windfang 69 vor der Tür 19 des Wohnwagens errichtet wird, um so den Wohnwagen besser für ein Wintercamping einzurichten. Die Einzelplatten werden dabei zu einem rechtwinkeligen Rahmen oder Gehäuse zusammengeschlossen, wie dies auch in Fig. 19 angedeutet ist, und die Einzelplatten liegen dabei mit ihren mit den Dichtungen 68 versehenen Kanten an der Wand des Aufbaues 2 des Wohnwagens dicht an. An einzelnen Stellen sind in der Wand des Aufbaues 2 den Nuten 66 vergleichbare Nuten oder Vertiefungen vorgesehen, um so die Platten an dieser Aufbauwand mittels der beschriebenen Steckverbindungen anschließen zu können. An der Unterseite stützen sich die zum Windfang zusammengebauten Platten zweckmäßigerweise an den Vorplatz-Platten 20 ab, die zumindest im hinteren Bereich, wo sich die Tür 19 befindet, ausgezogen und am Boden abgestützt sind.

Eine andere Einsatzmöglichkeit der Platten 20 besteht darin, diese Platten um den Wohnwagen 1 herum vertikal aufzustellen, wie in Fig. 16 angedeutet, um so einen, einen zusätzlichen Bodenschutz etwa beim Wintercamping ergebenden Unterbau 70 für den Wohnwagen zu erhalten. Auch hier können wiederum die beschriebenen Steckverbindungen benutzt werden, um einen stabilen Zusammenhalt der Einzelplatten zu erzielen.

Die Einzelplatten können an ihrer Oberseite genoppt oder gerippt sein, um so eine bessere Rutschfestigkeit zu erzielen. Andererseits ist auch eine Beschichtung oder ein Überzug, etwa mit Gummi oder gummiähnlichem Kunststoff, denkbar. Die Einzelplatten bestehen vorzugsweise aus glasfaserverstärktem Kunststoff.

Eine weitere Möglichkeit besteht hier darin, die Platten 20 mit Durchtrittslöchern zu versehen und sie somit rostartig zu gestalten, sodaß Wasser oder Schmutz abfließen bzw. hindurchfallen kann. In diesem Fall besitzen die Rost-Platten z. B. eine umlaufende, hochstehende Randleiste, wie in Fig. 17 bei 71 angedeutet, sowie sich vorzugsweise kreuz und quer erstreckende Stäbe 72. Auf diesem Rost können zumindest dort, wo das Vorzelt 60 errichtet wird, zusätzliche, begehbare, volle Bodenplatten 73 aufgelegt werden. Diese zusätzlichen Bodenplatten 73 sind ganz ähnlich wie die Platten 20 ausgebildet und insbesondere in identischer Weise für die beschriebenen Steckverbindung 65 ausgerüstet (sodaß die schematische Darstellung in den Fig. 17 bis 19 bezüglich dieser Steckverbindungen in gleicher Weise für die Platten 20 und die Bodenplatten 73 gültig ist). Um weiters die Bodenplatten 73 auf dem Rost zu sichern, können die Bodenplatten 73 an ihrer Unterseite federnde Klemmvorsprünge 74 aufweisen, mit denen sie an den Stäben 72 des Rostes festgeklemmt werden können, vgl. Fig. 18. Andererseits ist es auch möglich, die Bodenplatten 73 dadurch auf dem Rost festzulegen, daß die Bodenplatten 73 genau innerhalb des hochstehenden Randes eingepaßt sind. Schließlich ist auch eine Steckverbindung 65 zwischen den Bodenplatten 73 und dem Rost denkbar, wie in Fig. 17 schematisch gezeigt ist.

Selbstverständlich sind auch andere Verbindungsarten für die Platten möglich, wie etwa Haken oder Schnallen, und es ist ferner auch denkbar, zumindest die zum Windfang 69 zusammengestellten Platten untereinander zu verschrauben. Eine derartige Schraubverbindung ist v. a. bei größeren, massiveren Ausführungen von Vor teil.

Zur Komplettierung des Windfanges 69 kann an der Windfang-Vorderseite, die in Fig. 16 ersichtlich ist, ein Rahmen mit einer eigenen Tür 75 eingesetzt werden.

Sofern es sich bei der (oder den) Platte(n) um ausziehbare Platten bzw. um einen Ausziehrost handelt, kann man diese Platte(n) bzw. diesen Rost nicht nur an der einen Längsseite, an der sich die Tür 19 befindet, sondern auch an der anderen Längsseite ausziehbar vorsehen. Wenn diese Platten 20 bzw. dieser Rost an dieser anderen Längsseite ausgezogen werden, an der die beschriebenen Zusatzraum-Einheiten vorgesehen sind, so erfüllen dort diese Platten gegebenenfalls ebenfalls die Funktion eines Vorplatzes sowie weiters diejenige eines Zusatzbodens, wodurch eine zusätzliche Isolierung nach unten erzielt wird.

Die Erfindung, die vorstehend anhand von bevorzugten Ausführungsbeispielen näher erläutert wurde, ist in mannigfacher Weise abwandel- und modifizierbar, und sie ist somit nicht auf die beschriebenen Ausführungsbeispiele beschränkt.

## Patentansprüche

1. Selbstfahrendes oder gezogenes Fahrzeug, insbesondere Wohnmobil oder Wohnwagen, mit einem kastenförmigen Aufbau, der mit aus dem Aufbau ausklappbaren Wandelementen versehen ist, die im Abstellzustand des Fahrzeuges die Bildung eines an das Fahrzeug angebauten Zusatzraumes ermöglichen, wobei an einer Längsseite des Kastenaufbaues wenigstens eine am Aufbau bzw. Chassis (2) um eine waagrechte Schwenkachse nach unten ausschwenkbar gelagerte, den Boden eines Zusatzraumes bildende rechteckige Wand (3, 4) und wenigstens eine um eine waagrechte Schwenkachse nach oben ausschwenkbar gelagerte, das Dach dieses Zusatzraumes bildende rechteckige Wand (28) vorgesehen sind, und an der nach unten ausschwenkbaren, den Boden bildenden Wand (3, 4) sowohl Seitenwände (22) als auch eine Rückwand (23) scharnierartig angelenkt sind, und diese Seitenwände (22) und Rückwand (23) in der Ruhestellung an die den Boden bildende Wand (3, 4) angeklappt und in der ausgeschwenkten Stellung mit der nach oben ausschwenkbaren, das Dach bildenden Wand (28) sowie untereinander verbindbar sind, dadurch gekennzeichnet, daß an zumindest einem der im rechten Winkel zur Schwenkachse verlaufenden Seitenränder der nach oben ausschwenkbaren, das Dach bildenden Wand (28) eine Führungsbahn (33) für die im ausgeklappten Zustand äußere Rückwand (23) oder einen mit dieser fest verbundenen Führungsvorsprung, -zapfen od. dgl., insbesondere eine frei drehbar gelagerte, in der Führungsbahn laufende Rolle (35), vorgesehen ist, an welche Führungsbahn (33) eine am Aufbau (2) vorgesehene, nach unten verlaufende Führungsbahn (36) über einen bogenförmigen Führungsbahnabschnitt anschließt, wodurch das Anklappen der Rückwand (23) an die den Boden bildende Wand (4) zwangsgesteuert ist.

2. Fahrzeug nach Anspruch 1, dadurch gekennzeichnet, daß die Seitenwände (22), vorzugsweise gemäß einer parallel zu ihrer Scharnierachse an der den Boden bildenden Wand (4) verlaufenden Linie (20), unterteilt und die Seitenwandteile jeweils scharnierartig miteinander verbunden sind.

3. Fahrzeug nach Anspruch 1 oder 2, dadurch gekennzeichnet, daß die den Boden und das Dach des Zusatzraumes bildenden Wände (3, 4; 28) in ihrer vertikalen Ruhestellung in Draufsicht innerhalb der Umrißlinie des Fahrzeuges (1) liegen.

4. Fahrzeug nach einem der Ansprüche 1 bis 3, dadurch gekennzeichnet, daß für die nach oben ausschwenkbare, das Dach des Zusatzraumes bildende Wand (28) in an sich bekannter Weise eine mit ihr verbundene Gewichtsausgleichsfeder (56), z. B. eine um die Schwenkachse (54) der Wand herum angeordnete, gekapselte Schrauben-Drehfeder, vorgesehen ist.

5. Fahrzeug nach einem der Ansprüche 1 bis 4, dadurch gekennzeichnet, daß die nach oben ausschwenkbare, das Dach des Zusatzraumes bildende Wand (28) in an sich bekannter Weise durch eine Feder (53) in ihre vertikale Ruhestellung sowie in ihre ausgeschwenkte Dachstellung belastet ist.

6. Fahrzeug nach einem der Ansprüche 1 bis 5, dadurch gekennzeichnet, daß die Eingangstüre (19) an der dem Zusatzraum gegenüberliegenden Längswand des Kastenaufbaues vorgesehen ist, und daß an der die Eingangstüre (19) aufweisenden Längsseite des Kastenaufbaues im unteren, tiefer als die Tür (19) gelegenen Bereich des Aufbaues bzw. Chassis (2) eine Führung (62), wie zumindest ein Einschubfach, zur Aufnahme einer begehbaren, gegebenenfalls mehrteiligen, Platte (20), die zur Bildung eines Vorplatzes oder einer Terrasse vorgesehen ist, angeordnet ist, und die Platte (20) aus einer Ruhestellung, in der sie sich, in Draufsicht gesehen, innerhalb der Umrißlinie des Fahrzeugs (1) befindet, an der Seite, an der die Tür (19) vorgesehen ist, in eine einen Vorplatz oder eine Terrasse ergebende Betriebsstellung ausziehbar ist.

7. Fahrzeug nach Anspruch 6, dadurch gekennzeichnet, daß die den Vorplatz oder die Terrasse bildende Platte (20) entlang paralleler Linien unterteilt ist und die Teile scharnierartig zusammenklappbar miteinander verbunden sind.

8. Fahrzeug nach Anspruch 7, dadurch gekennzeichnet, daß die parallelen Unterteilungslinien parallel zur Ausziehrichtung verlaufen.

9. Fahrzeug nach einem der Ansprüche 6 bis 8, dadurch gekennzeichnet, daß die den Vorplatz oder die Terrasse bildende Platte (20) als Rost ausgebildet und auf dem Rost auflegbare, ebene Bodenplatten (73) vorgesehen sind.

10. Fahrzeug nach Anspruch 9, dadurch gekennzeichnet, daß die Bodenplatten (73) mit dem Rost (20) und/oder untereinander mittels Klemmen, Steckverbindungen und/oder Nut-Federeinrichtungen (65, 66, 67) verbindbar sind.

11. Fahrzeug nach Anspruch 9, dadurch gekennzeichnet, daß der Rost (20) einen hochstehenden Rand (71) aufweist, innerhalb dessen die aneinandergelegten Bodenplatten (73) passen.

12. Fahrzeug nach einem der Ansprüche 9 bis 11, dadurch gekennzeichnet, daß die Bodenplatten (73) mit Hilfe von an ihrer Unterseite angebrachten Klemmvorsprüngen (74) an den Stäben (72) des Rostes (20) festklemmbar sind.

13. Fahrzeug nach einem der Ansprüche 9 bis 12, dadurch gekennzeichnet, daß im Aufbau (2) wenigstens ein verschließbares Einschubfach für die Bodenplatten vorgesehen ist.

14. Fahrzeug nach einem der Ansprüche 6 bis 13, dadurch gekennzeichnet, daß an der Wand des Fahrzeug-Aufbaues (2) im Bereich der Tür (19) Verbindungseinrichtungen, wie Einsteck- oder Einhaköffnungen, zum kantenweisen Anschließen, z. B. insbesondere Anstecken, von sich vertikal und horizontal erstreckenden Platten zur Bildung eines Windfanges (69) vorgesehen sind.

## Claims

1. Self-propelled or trailed vehicle, particularly a mobile home or caravan, with a box-shaped superstructure which is fitted with wall elements that can fold out of the superstructure so that, in the parked condition of the vehicle, an additional space built onto the vehicle can be formed, wherein on one longitudinal side of the box superstructure there is provided on the superstructure or chassis (2) at least one rectangular wall (3, 4) downwardly pivotably mounted about a horizontal pivoting axis, in order to form the floor of an additional space, and at least one rectangular wall (28) upwardly pivotably mounted about a horizontal pivoting axis, in order to form the roof of said additional space, and, on the downwardly pivotable wall (3, 4) forming the floor, both side walls (22) and also a rear wall (23) are hinged and said side walls (22) and rear wall (23) are folded onto the wall forming the floor (3, 4) in the rest position, and in the pivoted out position they can be connected with the upwardly pivotable wall (28) forming the roof as well as with one another, characterised in that on at least one of the side edges extending at a right angle to the pivoting axis of the upwardly pivotable wall (28) forming the roof, there is provided a guide way (33) for the external rear wall (23) in the folded out condition, or for a guide projection, pin or the like, particularly a freely rotatably mounted roller (35) running along the guide way, rigidly connected with the latter wall with which guide way (33) a downwardly extending guide way (36) provided on the superstructure (2) connects by means of an arc-shaped guide way section, so that folding of the rear wall (23) onto the wall (4) forming the floor is positively controlled.

2. A vehicle according to claim 1, characterised in that the side walls (22) are divided preferably along a line (26) extending parallel with their hinge axis on the wall (4) forming the floor, and the side wall sections are each connected together by hinges.

3. A vehicle according to claim 1 or 2, characterised in that the walls (3, 4 ; 28) forming the floor and the roof of the additional space lie in top view in their vertical rest position within the contour of the vehicle (1).

4. A vehicle according to one of claims 1 to 3, characterised in that a weight equalizing spring (56) e. g. an enclosed helical torsion spring disposed around the pivoting axis (54) of the wall, is provided and connected in a known manner to the upwardly pivotable wall (28) forming the roof of the additional space.

5. A vehicle according to one of claims 1 to 4, characterised in that the upwardly pivotable wall (28) forming the roof of the additional space, is biased in a known manner by means of a spring (53) into its vertical rest position as well as into its pivoted out roof position.

6. A vehicle according to any one of claims 1 to 5, characterised in that the entrance door (19) is provided in the longitudinal wall of the box superstructure situated opposite the additional space, and in that on the longitudinal side of the box superstructure which has the entrance door (19) there is located in the lower region of the superstructure or chassis (2) on a lower level than the door (19) a guide (62) such as at least an insertion compartment for receiving a functional, possibly multi-part deck (20) providing a patio or a terrace, and the deck (20) can be pulled out of a rest position, in which it is situated, when viewed from above, within the contour of the vehicle (1) to the side in which the door (19) is provided, into an operative position providing a patio or a terrace.

7. A vehicle according to claim 4, characterised in that the deck (20) forming the patio or terrace is divided along parallel lines, and the sections are joined together by hinges so that they can be folded together.

8. A vehicle according to claim 7, characterised in that the parallel division lines extend parallel to the direction of pulling out.

9. A vehicle according to any one of claims 6 to 8, characterised in that the deck (20) forming the patio or terrace is constructed as a grating and flat floor tiles (73) are provided which can be laid on the grating.

10. A vehicle according to claim 9, characterised in that the floor tiles (73) can be connected with the grating (20) and/or with one another by means of clamps, plug-in connections and/or tongue-and-groove arrangements (65, 66, 67).

11. A vehicle according to claim 9, characterised in that the grating (20) has a raised edge (71) inside which the contiguous floor tiles (73) fit.

12. A vehicle according to one of claims 9 to 11, characterised in that the floor tiles (73) can be clamped by means of clamping projections (74) fitted on their underside onto the bars (72) of the grating (20).

13. A vehicle according to one of claims 9 to 12, characterised in that in the superstructure (2) at least one lockable insertion compartment is provided for the floor tiles.

14. A vehicle according to one of claims 6 to 13, characterised in that on the wall of the vehicle superstructure (2) in the region of the door (19), connecting devices, such as insertion or hooking openings, are provided for the edgewise connection, e. g. particularly clipping, of vertically and horizontally extending panels for forming a wind break (69).

## Revendications

1. Véhicule automobile ou remorqué, notamment mobil-home ou caravane, avec une carrosserie en forme de caisson, munie d'éléments de parois pouvant s'écarter de la carrosserie par pivotement, et permettant, lorsque le véhicule est à l'arrêt, de former un volume supplémentaire ajouté au véhicule, en prévoyant sur une face longitudinale de la carrosserie en caisson au moins une paroi rectangulaire (3, 4) montée pour pivoter vers le bas autour d'un axe de pivotement horizontal sur la carrosserie ou le châssis (2) et formant le plancher d'un volume supplémentaire ainsi qu'au moins une paroi rectangulaire (28) montée pour pivoter vers le haut autour d'axe de pivotement horizontal et formant le toit de ce volume supplémentaire, des parois latérales (22) ainsi qu'une paroi arrière (23) étant articulées à charnière sur la paroi (3, 4) pivotant vers le bas et formant le plancher, ces parois latérales (22) et cette paroi arrière (23) étant, dans la position de repos, rabattues sur la paroi (3, 4) formant le plancher et pouvant, dans la position étendue, être reliées à la paroi (28) pivotant vers le haut et formant le toit, ainsi qu'entre elles, caractérisé en ce que, sur au moins l'un des bords latéraux, s'étendant à angle droit par rapport à l'axe de pivotement, de la paroi (28) pivotant vers le haut et formant le toit, il est prévu une piste de guidage (33) pour la paroi arrière (23), extérieure dans la position étendue, ou pour une saillie, téton ou organe similaire de guidage assemblé solidairement avec cette paroi, notamment pour un galet (35) roulant librement et se déplaçant dans la piste de guidage, piste de guidage (33) à laquelle se raccorde, par un tronçon de piste de guidage, en forme d'arc, une piste de guidage (36) s'étendant vers le bas et prévue sur la carrosserie (2), le rabattement de la paroi arrière (23) sur la paroi (4) formant le plancher étant ainsi commandé par force.

2. Véhicule selon la revendication 1, caractérisé en ce que les parois latérales (22) sont divisées, de préférence suivant une parallèle à leur axe d'articulation à charnière sur la paroi (4) formant le plancher, les éléments de parois latérales étant respectivement reliés entre eux à charnière.

3. Véhicule selon la revendication 1 ou 2, caractérisé en ce que les parois (3, 4 ; 28) formant le plancher et le toit du volume supplémentaire sont, dans leur position de repos verticale, situées en plan à l'intérieur du contour du véhicule (1).

4. Véhicule selon l'une des revendications 1 à 3, caractérisé en ce que pour la paroi (28) pivotant vers le haut et formant le toit du volume supplémentaire, il est prévu de façon en soi connue un ressort de compensation de poids (56) relié à cette paroi, par exemple un ressort de torsion hélicoïdal disposé autour de l'axe de pivotement (54) de la paroi et enfermé.

5. Véhicule selon l'une des revendications 1 à 4, caractérisé en ce que la paroi (28) pivotant vers le haut et formant le toit du volume supplémentaire est, dans sa position de repos verticale ainsi que dans la position de toit sortie par pivotement, chargée de façon en soi connue par un ressort.

6. Véhicule selon l'une des revendications 1 à 5, caractérisé en ce que la porte d'entrée (19) est prévue dans la paroi longitudinale de la carrosserie en caisson située en face du volume supplémentaire, et en ce que sur la face longitudinale de la carrosserie en caisson présentant la porte d'entrée (19) est disposé, dans la partie inférieure de la carrosserie ou du châssis (2) située plus bas que la porte (19), un guidage (62), tel qu'au moins un logement à tiroir, pour recevoir une plaque accessible (20), le cas échéant en plusieurs éléments, prévue pour former un vestibule ou une terrasse, cette plaque (20) pouvant être tirée, d'une position de repos dans laquelle elle se trouve, en regardant en plan, à l'intérieur du contour du véhicule (1), du côté où est prévue la porte (19), dans une position de service donnant un vestibule ou une terrasse.

7. Véhicule selon la revendication 6, caractérisé en ce que la plaque (20) formant un vestibule ou une terrasse est divisée le long de lignes parallèles et en ce que les éléments sont assemblés entre eux à charnière pour pouvoir se rabattre.

8. Véhicule selon la revendication 7, caractérisé en ce que les lignes de division parallèles s'étendent parallèlement à la direction de traction.

9. Véhicule selon l'une des revendications 6 à 8, caractérisé en ce que la plaque (20) formant le vestibule ou la terrasse est réalisée sous forme de grille, des plaques de plancher planes (73) étant prévues pour être posées sur la grille.

10. Véhicule selon la revendication 9, caractérisé en ce que les plaques de plancher (73) peuvent être assemblées avec la grille (20) et/ou entre elles au moyen de pinces, d'assemblages à fiches et/ou d'organes à rainures et languettes (65, 66, 67).

11. Véhicule selon la revendication 9, caractérisé en ce que la grille (20) présente un bord relevé (71), à l'intérieur duquel s'ajustent les plaques de plancher (73) posées l'une contre l'autre.

12. Véhicule selon l'une des revendications 9 à 11, caractérisé en ce que les plaques de plancher (73) peuvent être bloquées sur les barreaux (72) de la grille (20) à l'aide de saillies de blocage (74) disposées sur leur face intérieure.

13. Véhicule selon l'une des revendications 9 à 12, caractérisé en ce qu'au moins un compartiment à tiroir pouvant être fermé est prévu dans la carrosserie (2) pour les plaques de plancher.

14. Véhicule selon l'une des revendications 6 à 13, caractérisé en ce que sur la paroi de la carrosserie (2) du véhicule, dans la zone de la porte (19), sont prévus des dispositifs d'assemblages, tels que des ouvertures d'introduction ou d'accrochage, pour le raccordement en bordure, par exemple, notamment l'introduction, de plaques s'étendant verticalement et horizontalement pour former un paravent (69).

FIG. 1

0 116 563

FIG. 2

FIG. 3

FIG.4

FIG.5

4

FIG. 6

FIG. 7

FIG. 8

FIG. 9

FIG. 10

FIG. 11

FIG. 12

FIG. 13

FIG. 14

FIG.15

FIG.16

FIG. 17

FIG. 18

FIG. 19